# EUROPÄISCHE PATENTSCHRIFT

(11) **EP 1 232 666 B1**
(45) Veröffentlichungstag und Bekanntmachung des Hinweises auf die Patenterteilung: **01.02.2006**
(21) Anmeldenummer: 00984907.6
(22) Anmeldetag: 24.11.2000
(51) Int. Cl.: H04Q 7/38

(54) **VERFAHREN ZUR SIGNALISIERUNG VON INFORMATIONEN ÜBER NACHBARFUNKZELLEN IN EINEM FUNK-KOMMUNIKATIONSSYSTEM**
METHOD FOR SIGNALLING INFORMATION ABOUT ADJACENT RADIO CELLS IN A RADIO COMMUNICATIONS SYSTEM
PROCEDE DE SIGNALISATION D'INFORMATIONS PAR L'INTERMEDIAIRE DE CELLULES RADIO VOISINES DANS UN SYSTEME DE COMMUNICATION RADIO

(30) Priorität: 26.11.1999 DE 19957031
(43) Veröffentlichungstag der Anmeldung: 21.08.2002
(60) Teilanmeldung: 05015992.0
(73) Patentinhaber: SIEMENS AKTIENGESELLSCHAFT, 80506 München (DE)
(72) Erfinder: FÄRBER, Michael, 82515 Wolfratshausen (DE)
(86) Internationale Anmeldenummer: PCT/DE2000/004176
(87) Internationale Veröffentlichungsnummer: WO 2001/039533

(56) Entgegenhaltungen:
- EP-A- 0 888 026
- EP-A- 0 941 003
- EP-A- 1 061 759

## Beschreibung

Die Erfindung betrifft ein Verfahren zur Signalsierung von Informationen über Nachbarfunkzellen in einem Funk-Kommunikationssystem, insbesondere in einem Mobilfunksystem. Insbesondere ist das Verfahren für eine Verbindungsweiterschaltung (Handover) zwischen digitalen Mobilfunksystemen der zweiten und dritten Generation mit unterschiedlichen Übertragungsverfahren nutzbar.

In Funk-Kommunikationssystemen werden Informationen wie beispielsweise Sprache, Bildinformationen oder andere Daten, mit Hilfe von elektromagnetischen Wellen über eine Funkschnittstelle zwischen einer sendenden und einer empfangenden Funkstation, wie beispielsweise einer Basisstation bzw. einer Mobilstation für den Fall eines Mobilfunksystems, übertragen. Das Abstrahlen der elektromagnetischen Wellen erfolgt dabei mit Trägerfrequenzen, die in dem für das jeweilige System vorgesehenen Frequenzband liegen. Beim bekannten GSM-Mobilfunksystem (Global System for Mobile Communication) liegen die Trägerfrequenzen im Bereich von 900 MHz, 1800 MHz und 1900 MHz. Für zukunftige Mobilfunksysteme mit CDMA- und TD/CDMA-Übertragungsverfahren über die Funkschnittstelle, wie beispielsweise das UMTS (Universal Mobile Telecommunication System) oder andere Systeme der 3. Generation sind Trägerfrequenzen im Bereich von ca. 2000 MHz vorgesehen. Für das erwähnte UMTS-Mobilfunksystem wird zwischen einem sogenannten FDD-Modus (Frequency Division Duplex) mit einem sogenannten W-CDMA-Übertragungsverfahren (Wideband-CDMA) und einem TDD-Modus (Time Division Duplex) mit einem TD/CDMA-Übertragungsverfahren unterschieden. Der TDD-Modus zeichnet sich insbesondere dadurch aus, daß ein gemeinsames Frequenzband sowohl für die Signalübertragung in Aufwärtsrichtung (UL - Uplink) als auch in Abwärtsrichtung (DL - Downlink) genutzt wird, während der FDD-Modus für die Übertragungsrichtungen ein jeweiliges Frequenzband nutzt.

Zwischen der digitalen Mobilfunksystemen der zweiten und dritten Generation soll eine problemlose Verbindungsweiterschaltung ermöglicht werden, da vor allem zu Beginn des Ausbaus der Systeme der dritten Generation eine vollständige Versorgung bzw. Abdeckung nicht vorgesehen ist. Beispielsweise sollen anfangs nur Ballungsgebiete mit dem System ausgestattet werden, wohingegen ländliche Gebiete weiterhin ausschließlich mit auf dem Mobilfunksystem der zweiten Generation basierenden Systemen versorgt werden. Es wird demnach zumindest in dieser Anfangsphase Teilnehmerstationen geben, die sowohl das Übertragungsverfahren der zweiten Generation, beispielsweise GSM, als auch ein oder mehrere Übertragungsverfahren der dritten Generation, beispielsweise TDD und/oder FDD-Modus, unterstützen. Betreibt eine derartige sogenannte Multimode-Teilnehmerstation eine Kommunikationsverbindung über ein Mobilfunksystem der zweiten Generation bzw. ist im sogenannten Idle-Mode, so müssen ihr Informationen über parallel existierende Mobilfunksysteme signalisiert werden, um eine Beobachtung der Übertragungseigenschaften und gegebenenfalls eine Verbindungsweiterschaltung zu Basisstationen des Mobilfunksystems der dritten Generation zu ermöglichen. Eine derartige Verbindungsweiterschaltung kann beispielsweise aufgrund eines gewünschten Aufbaus eines-zusätzlichen hochratigen Dienstes, einer besseren Versorgung oder einer besseren Dienstequalität initiiert werden. Die zu signalisierenden Informationen über das parallele Mobilfunksystem beinhalten beispielsweise eine Liste von Nachbarfunkzellen, die das entsprechende Übertragungsverfahren unterstützen.

In dem GSM-Mobilfunksystem werden auf einem Organisationskanal BCCH (Broadcast Control Channel) in Systeminformationselementen sogenannte Nachbarzellisten signalisiert. Diese Listen enthalten unter anderem Informationen über die jeweiligen Frequenzen von benachbarten Funkzellen, die zwecks einer eventuellen Verbindungsweiterschaltung von den Teilnehmerstationen in der Funkzelle beobachtet werden sollen. Hierbei führt die Teilnehmerstation periodisch in jedem Übertragungsrahmen Feldstärkemessungen der ausgesendeten Organisationskanäle BCCH der benachbarten Basisstationen durch. Diese gemessenen und unquantisierten analogen Meßwerte werden jeweils in einen quantisierten Wert überführt und innerhalb einer Tabelle einem bestimmten Wertebereich zugeordnet. Diese quantisierten Werte werden in dem GSM-Mobilfunksystem mit RXLEV bezeichnet und über einen weiteren Organisationskanal SACCH (Slow Associated Control Channel) zu der Basisstation bzw. der Basisstations-Steuerung (BSC - Base Station Controller) signalisiert. Weiterhin wird von der Teilnehmerstation eine Liste der bevorzugten Funkzellen für eine Verbindungsweiterschaltung generiert, deren Rangordnung durch die quantisierten Meßwerte der einzelnen Funkzellen bestimmt ist. Die Entscheidung, in welche Funkzelle die Verbindung weitergeschaltet wird, wird in der Basisstations-Steuerung getroffen, da nur diese in Kenntnis eines freien Kanals in der bevorzugten Funkzelle ist. Liegt die bevorzugte Funkzelle außerhalb des Bereichs der Basisstations-Steuerung, so wird von dieser eine Verbindungsweiterschaltung über eine Mobilvermittlungsstelle zu einer weiteren Basisstations-Steuerungn initiiert.

Eine vergleichbare Signalisierung von Nachbarzellisten von parallelen Mobilfunksystemen beispielsweise der dritten Generation wäre beispielsweise durch eine Erweiterung der Systeminformationselemente in dem Organisationskanal BCCH möglich. Dieses würde jedoch aufgrund einer Vielzahl von gegebenenfalls parallel existierenden Systemen der dritten Generation mit unterschiedlichen Übertragungsverfahren, wie beispielsweise dem FDD- und TDD-Modus des UMTS sowie des amerikanischen MC-CDMA-Verfahrens, zu einer hohen zusätzlichen Signalisierungslast auf dem Organisationskanal BCCH und einer daraus folgenden nicht mehr zeitgerechten Verfügbarkeit der Informationen führen. Weiterhin müßte die Signalisierung derart strukturiert sein, daß Teilnehmerstationen, die keine Übertragungsverfahren der dritten Generation unterstützen, die zusätzlichen Informationen nicht fehlinterpretieren.

Ein Verfahren zur Zell-Auswahl und zur Verbindungs-Weiterschaltung (Handover) in einem System mit mehreren unterschiedlichen Funk-Kommunikationssystemen ist in EP 0 888 026 A2 offenbart.

Der Erfindung liegt die Aufgabe zugrunde, ein Verfahren anzugeben, das eine vereinfachte Signalisierung von Informationen über Nachbarfunkzellen ermöglicht. Diese Aufgabe wird durch das Verfahren gemäß den Merkmalen des unabhängigen Patentansprunchs 1 gelöst. Weiterbildungen der Erfindung sind den Unteransprüchen zu entnehmen.

Das erfindungsgemäße Verfahren bietet den Vorteil, daß die Signalisierung von allen existierenden parallelen Funk-Kommunikationssystemen bzw. deren Funkzellen nicht über einen Organisationskanal mit den beschriebenen Nachteilen für dessen Signalisierungslast und der großen Zeitverzögerung signalisiert werden. Die Signalisierung umfaßt jeweils nur Informationen über das oder die von der Teilnehmerstation unterstützten parallelen Systeme, wodurch die Signalisierungslast vorteilhaft reduziert wird. Der Signalisierungsaustausch kann problemlos in die existierende Signalisierungsprozeduren beispielsweise der Mobilitätsverwaltung (Mobility Management) integriert werden, und erfordert keine hardwareseitige Veränderungen an den bereits existierenden Systemen bzw. deren Komponenten. Dabei bei der verbindungsindividuellen Signalisierung beispielsweise nur eine Liste der Nachbarfunkzellen des zweiten Funk-Kommunikationssystems übertragen werden, da die Nachbarfunkzellen des ersten Funk-Kommunikationssystems bei dem beispielhaft genannten GSM-Mobilfunksystem bereits in dem Organisationskanal BCCH signalisiert werden.

Gemäß einer ersten Weiterbildung der Erfindung erfolgt die Signalisierung der Nachbarfunkzellen des zweiten Funk-Kommunikationssystems abhängig beispielsweise von einer aktuellen Verkehrsbelastung in dem ersten Funk-Kommunikationssystem bzw. abhängig von einem aktuellen Aufenthaltsort der Teilnehmerstation. Durch diese Ausgestaltung ist beispielsweise ein Betreiber, der sowohl das erste als auch das zweite Funk-Kommunikationssystem betreibt, in der Lage, Verbindungsweiterschaltungen gezielt zu bestimmten Funkzellen zu initiieren. So können beispielsweise bestimmte Dienste mit speziellen Anforderungen in bestimmten Funkzellen konzentriert oder im Gegenteil auf viele Funkzellen verteilt werden, um eine lokale Überlastung einer Funkzelle zu verhindern. Der Betreiber ist demnach in der Lage, einer Teilnehmerstation nur bestimmte Funkzellen anzubieten und andere zu verbergen, wodurch beispielsweise die Verbindungsweiterschaltungsprozedur beschleunigt werden kann, wenn beispielsweise eine Verbindung über eine längere Zeit innerhalb des kontrollierten Bereichs einer einzigen Basisstations-Steuerung gehalten werden kann.

Die Signalisierung der Unterstützung des zweiten Übertragungsverfahrens durch die Teilnehmerstation erfolgt gemäß einer weiteren Ausgestaltung der Erfindung in einem wahlfreien Zugriffskanal, auf den die Teilnehmerstation bei einem Verbindungsaufbauversuch nach einem zufallsgesteuerten Zugriffsverfahren zugreift. Dieser Zugriffskanal kann in dem beispielhaft genannten GSM-Mobilfunksystem der RACH (Random Access Channel) sein. Die Signalisierung der Informationen über Nachbarzellen des zweiten Funk-Kommunikationssystems durch die Basisstation des ersten Funk-Kommunikationssystems erfolgt gemäß einer weiteren Ausgestaltung der Erfindung in einem Bestätigungskanal, welcher in dem beispielhaften GSM-Mobilfunksystem der AGCH (Access Grant Channel) sein kann.

Befindet sich die Teilnehmerstation bereits in einem eingebuchten Zustand, so kann gemäß einer weiteren Weiterbildung der Erfindung die aktuelle Signalisierung der Nachbarfunkzellen gemeinsam mit Signalisierungen der Mobilitätsverwaltung erfolgen. Die Mobilitätsverwaltung umfaßt in dem beispielhaft genannten GSM-Mobilfunksystem unter anderem beispielsweise das sogenannte IMSI-Attach sowie die periodische Aktualisierung des Aufenthaltsortes der Teilnehmerstation. Vorteilhaft kann durch eine marginale Erweiterung der Signalisierung das erfindungsgemäße Verfahren in ein bestehendes System ohne notwendige Veränderungen der Infrastruktur integriert werden.

Die Informationen über Nachbarfunkzellen werden gemäß einer weiteren Weiterbildung der Erfindung für eine Verbindungsweiterschaltung und/oder einen Aufbau eines zusätzlichen Dienstes genutzt. So kann beispielsweise eine bestehende Sprachverbindung weiterhin über ein Funk-Kommunikationssystem der zweiten Generation erfolgen, während gleichzeitig eine Internetverbindung über eine Funkzelle eines Systems der dritten Generation aufgebaut wird. Wiederum kann vorteilhaft eine Konzentration bzw. Diversifikation einzelner Diensteklassen auf unterschiedliche Funkzellen bzw. Systeme erfolgen, um vorteilhaft eine möglichst optimale Verkehrsbelastung in den parallelen Systemen zu erzielen.

Gemäß einer weiteren Weiterbildung der Erfindung werden von der Teilnehmerstation Messungen bezüglich von Übertragungseigenschaften zu jeweils Basisstationen der parallelen Funk-Kommunikationssysteme durchgeführt und der Basisstation des ersten Funk-Kommunikationssystems signalisiert. Hierdurch wird vorteilhaft eine Verbindungsweiterschaltung auch über Systemgrenzen in einfacher Weise ermöglicht, wenn die Messungen systemübergreifend auswertbar sind.

Wie einleitend beschrieben, ermittelt beispielsweise eine Teilnehmerstation des GSM-Mobilfunksystems eine jeweilige Feldstärke von Organisationskanälen der benachbarten Basisstationen und signalisiert diese nach einer Quantifizierung zu der Basisstation, zu der sie aktuell eine Verbindung aufgebaut hat. Für das zukünftige UMTS-Mobilfunksystem sind zusatzlich weitergehende Messungen wie beispielsweise von Störpegeln oder Leistungen spezieller Codesequenzen zur Entscheidungsfindung bezüglich einer Verbindungsweiterschaltung vorgesehen. Derartige Messungen können von einer GSM-Basisstation bzw. einer Basisstations-Steuerung nicht ausgewertet werden, da sie keine spezifischen Kenntnisse derartiger Meßsequenzen besitzen. Zudem sind die Signalisierungsnachrichten des GSM-Systems nicht für diese Meßsequenzen vorgesehen. Gemäß einer weiteren Weiterbildung der Erfindung werden daher die Messungen bezüglich der Basisstationen des zweiten Funk-Kommunikationssystems auf ein in dem ersten Funk-Kommunikationssystem verwendetes Format abgebildet. Dieses bedeutet, daß beispielsweise die komplexeren Meßsequenzen eines UMTS-Systems auf einfache Meßwerte eines GSM-Systems abgebildet werden und somit in der Basisstations-Steuerung ausgewertet werden können. Die Teilnehmerstation weist hierfür beispielsweise eine Funktion auf, die die Meßsequenzen des UMTS-Systems in den beschriebenen quantisierten GSM-Wertebereich von RXLEV abbildet. Diese Abbildung muß nicht starr erfolgen, sondern kann adaptiv spezifischen Situationen angepaßt werden.

Gemäß einer auf der vorherigen Ausgestaltung basierenden weiteren Weiterbildung der Erfindung werden die Meßwerte bezüglich der Basisstationen des zweiten Funk-Kommunikationssystems gewichtet. Eine derartige Wichtung der Meßwerte, beispielsweise durch zusätzliche Parameter, ermöglicht vorteilhaft, daß die Basisstationen des zweiten Funk-Kommunikationssystems in eine bevorzugte oder benachteiligte Position in der Liste der für eine Verbindungsweiterschaltung vorgesehenen Basisstationen gebracht werden können. Dieses kann auch basisstationsindividuell erfolgen. Die Wichtungsparameter bzw. Wichtungsfaktoren können der Teilnehmerstation beispielsweise bei dem Verbindungsaufbau von der Basisstation des ersten Funk-Kommunikationssystems signalisiert werden, wobei die Wichtungsfaktoren beispielsweise abhängig von einer aktuellen Verkehrsbelastung in den einzelnen Funkzellen gewählt werden.

Das erfindungsgemäße Verfahren und die damit zusammenwirkenden Komponenten des Funk-Kommunikationssystems werden nun anhand von zeichnerischen Darstellungen näher erläutert. Dabei zeigen
- FIG 1: ein Blockschaltbild eines Funk-Kommunikationssystems, insbesondere eines Mobilfunksystems,
- FIG 2: eine Darstellung von Funkzellen unterschiedlicher Funk-Kommunikationssysteme,
- FIG 3: ein Ablaufdiagramm einer Signalisierung von Informationen über Nachbarfunkzellen bei einem Verbindungsaufbau, und
- FIG 4: ein Ablaufdiagramm von Messungen von Übertragungseigenschaften und einer Abbildung auf ein bestimmtes Format zur Signalisierung zu einer Basisstation.

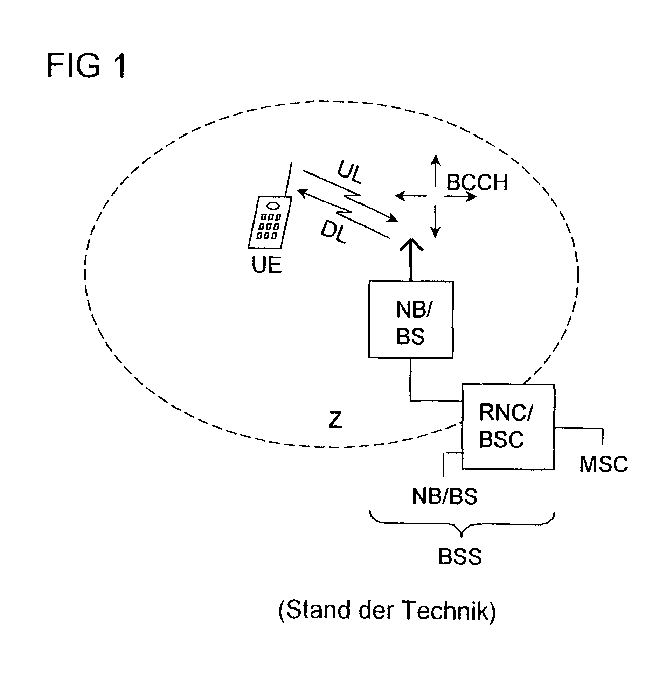

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC (Mobile Switching Center, die zu einem Vermittlungsnetz (Switching Subsystem) gehören und untereinander vernetzt sind bzw. den Zugang zu einem Festnetz PSTN herstellen, und aus jeweils einem oder mehreren mit diesen Mobilvermittlungsstellen MSC verbundenen Basisstationssystemen BSS (Base Station Subsystem). Ein Basisstaticnssystem BSS weist wiederum zumindest eine Basisstations-Steuerung BSC (GSM-Mobilfunksystem) bzw. eine Einrichtung RNC (Radio Network Controller) zum Zuweisen von funktechnischen Ressourcen (UMTS-Mobilfunksystem) sowie zumindest eine jeweils damit verbundene Basisstation BS (GSM) bzw. NB (Node B) (UMTS) auf.

Eine Basisstation BS/NB kann über eine Funkschnittstelle Verbindungen zu Teilnehmerstationen UE (User Equipment) aufbauen und unterhalten. Durch jede Basisstation BS/NB wird zumindest eine Funkzelle Z gebildet. Die Größe der Funkzelle Z wird in der Regel durch die Reichweite eines Organisationskanals (BCCH - Broadcast Control Channel), der von den Basisstationen BS/NB mit einer im Vergleich zu Verkehrskanälen jeweils höheren und konstanten Sendeleistung gesendet wird, bestimmt. Bei einer Sektorisierung oder bei hierarchischen Zellstrukturen können pro Basisstation BS/NB auch mehrere Funkzellen Z versorgt werden.

Das Beispiel der FIG 1 zeigt eine Teilnehmerstation UE, die sich in der Funkzelle Z einer Basisstation NB/BS befindet und sich mit einer Geschwindigkeit V bewegt. Die Teilnehmerstation UE hat eine Kommunikationsverbindung zu der Basisstation BS/NB aufgebaut, auf der in Aufwärts- UL und Abwärtsrichtung DL eine Signalübertragung eines gewählten Dienstes erfolgt. Aufgrund der Bewegung der Teilnehmerstation UE ist bei einem Erreichen einer Funkzellgrenze eine Verbindungsweiterschaltung, ein sogenanntes Handover oder Handoff, zu einer Basisstation BS/NB einer benachbarten Funkzelle Z notwendig, um eine unterbrechungsfreie Kommunikationsverbindung zu gewährleisten. Die Steuerung einer Verbindungsweiterschaltung erfolgt in der Basisstations-Steuerung BSC bzw. der Einrichtung zur Zuweisung funktechnischer Ressourcen RNC.

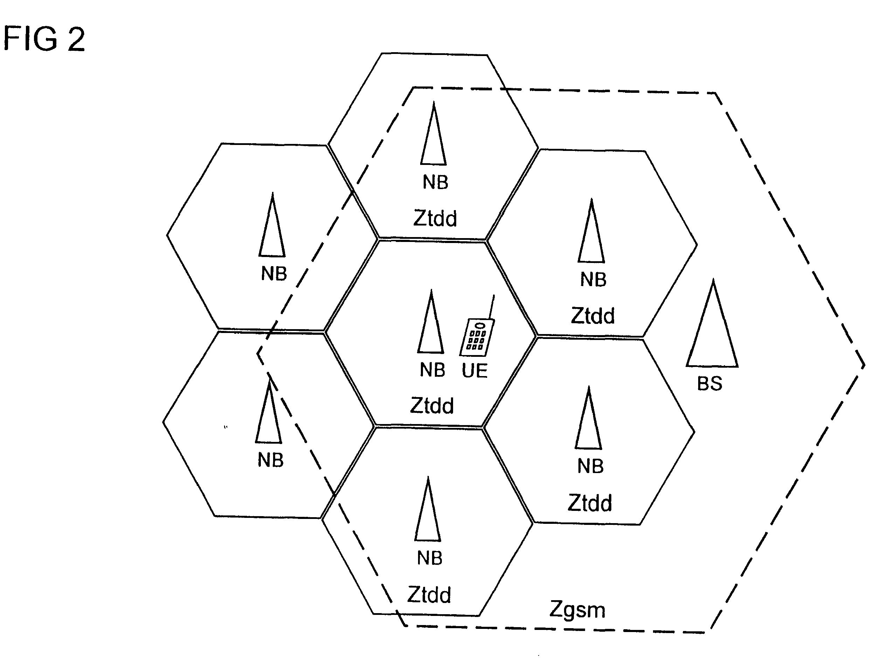

In der FIG 2 ist beispielhaft eine Struktur von Funkzellen Z zweier parallel betriebener Funk-Kommunikationssysteme dargestellt. Eine Funkzelle Zgsm, in diesem Fall eine Makrozelle mit einem großen Versorgungsradius, einer Basisstation BS eines GSM-Mobilfunksystem überdeckt eine Vielzahl von Mikrooder Pikozellen Ztdd eines UMTS-Mobilfunksystem mit einem TDD-Modus. Andere beispielhafte Konstellationen verschiedener Systeme sind ebenfalls denkbar und im Rahmen der Erfindung offenbart.

Die dargestellte Teilnehmerstation UE unterstützt beide Übertragungsverfahren GSM und TDD und befindet sich beispielhaft sowohl in dem Versorgungsbereich der Basisstation BS des GSM-Mobilfunksystems als auch der Basisstationen NB des UMTS-Mobilfunksystems, wird aktuell jedoch von der Basisstation BS des GSM-Mobilfunksystems mit funktechnischen Ressourcen versorgt bzw. befindet sich in dem sogenannten Idle-Mode und beobachtet nur den von der Basisstation BS ausgesendeten Organisationskanal BCCH. Um gegebenenfalls einen Verbindungsaufbau zum Betreiben eines hochratige Datendienstes oder eine generelle Verbindungsweiterschaltung in eine Funkzelle Ztdd des UMTS-Mobilfunksytems zu initiieren, muß die Teilnehmerstation UE über die in Frage kommenden Funkzellen Ztdd des parallelen UMTS-Mobilfunksystems von der Basisstation BS des GSM-Mobilfunksystems informiert werden.

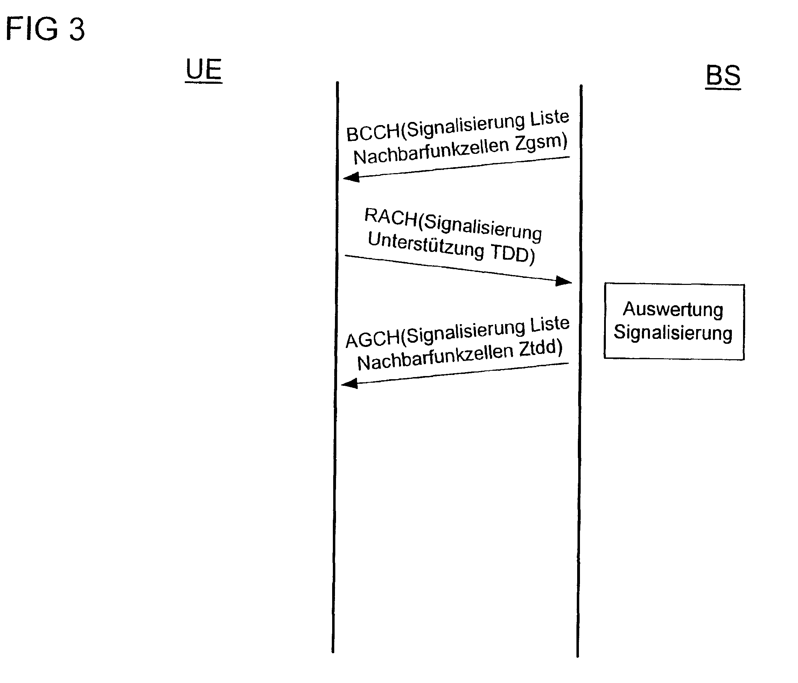

Die Signalisierung der möglichen Basisstationen NB des UMTS-Mobilfunksystems erfolgt wie in der FIG 3 dargestellt beispielsweise bei einem Verbindungsaufbau. Die Teilnehmerstation UE beobachtet wie beschrieben periodisch den Organisationskanal BCCH der Basisstation BS des GSM-Mobilfunksystems. In diesem Kanal BCCH signalisiert die Basisstation BS eine Liste mit als Kandidaten für eine Verbindungsweiterschaltung in Frage kommenden benachbarten Basisstationen BS ebenfalls des GSM-Mobilfunksystems. Bei einem Verbindungsaufbauversuch signalisiert die Teilnehmerstation UE zu der Basisstation BS neben den bekannten Signalisierungsnachrichten auch eine Unterstützung des TDD-Übertragungsverfahrens. Die Basisstation BS wertet diese Signalisierung aus und signalisiert ihrerseits in einem Bestätigungskanal AGCH neben den bekannten Signalisierungsnachrichten eine Liste von Basisstationen NB bzw. Funkzellen Ztdd des parallelen UMTS-Mobilfunksystems. Die Teilnehmerstation UE ist somit in der Lage, sowohl die in der Liste genannten Funkzellen Zgsm des GSM-Mobilfunksystems, als auch die Funkzellen Ztdd des UMTS-Mobilfunksystems zu beobachten und bestmögliche für eine Verbindungsweiterschaltung auszuwählen.

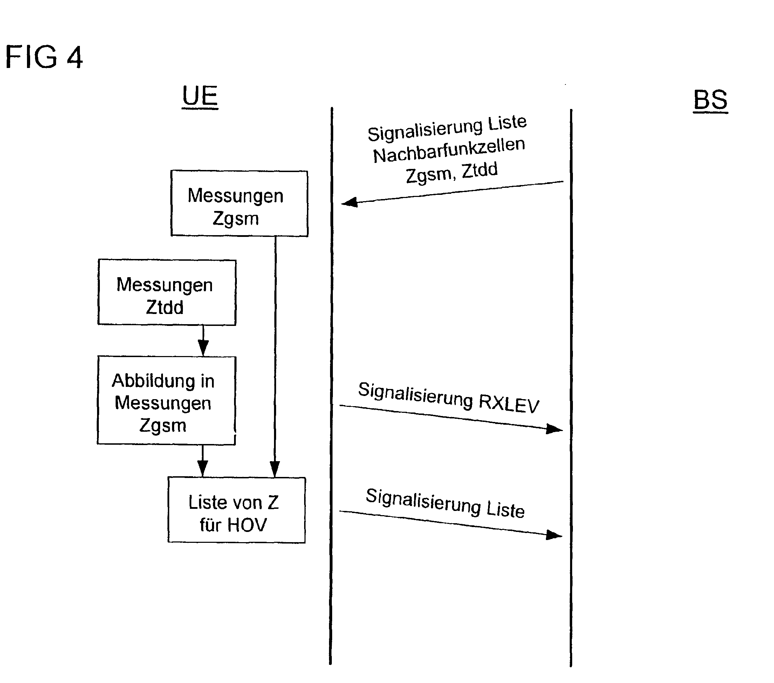

Da wie beschrieben die Messungen bezüglich von Übertragungseigenschaften zu den jeweiligen Basisstationen BS, NB zwischen den Mobilfunksystemen der zweiten und dritten Generation verschieden sind, führt die Teilnehmerstation UE gemäß der FIG 4 eine Abbildung der Messungen bzw. der ermittelten Meßsequenzen bezüglich der Basisstationen NB des UMTS-Mobilfunksystems auf ein Format des GSM-Mobilfunksystems durch.

Hierdurch ist eine Auswertung auch der Messungen der UMTS-Basisstationen NB durch die Basisstations-Steuerung BSC des GSM-Mobilfunksystems möglich. In der Basisstations-Steuerung BSC können die Kandidaten der UMTS-Basisstationen NB in der signalisierten Liste der Teilnehmerstation UE wie normale GSM-Basisstationen BS behandelt werden. Entsprechend einer Verbindungsweiterschaltung zwischen zwei Basisstations-Steuerungen BSC wird in diesem Fall tatsächlich eine Verbindung zu einer Einrichtung zur Zuweisung funktechnischer Ressourcen RNC des UMTS-Mobilfunksystems hergestellt. Dieses bleibt jedoch in dem gesamten betroffenen Basisstationssystem BSS des GSM-Mobilfunksystems verborgen, da keine Veränderungen gegenüber dem normalen Verfahren erfolgen.

## Patentansprüche

1. Verfahren zur Signalisierung von Informationen über Nachbarfunkzellen in einem Funk-Kommunikationssystem, bei dem von einer Teilnehmerstation (UE) Messungen hinsichtlich von jeweiligen Übertragungseigenschaften zu Basisstationen (BS, NB) eines ersten Funk-Kommunikationssystems, das ein erstes Übertragungsverfahren (GSM) unterstützt, und zumindest eines zweiten Funk-Kommunikationssystems, das ein zweites Übertragungsverfahren (TDD, FDD) unterstützt, durchgeführt werden,
**dadurch gekennzeichnet, dass**
die Messungen bezüglich der Basisstationen (NB) des zweiten Funk-Kommunikationssystems auf ein in dem ersten Funk-Kommunikationssystem verwendetes Format abgebildet und gemeinsam zu einer Basisstation (BS) des ersten Funk-Kommunikationssystems signalisiert werden.

2. Verfahren nach Anspruch 1, bei dem
von der Teilnehmerstation (UE) bei einem Verbindungsaufbau zu einer Basisstation (BS) des ersten Funk-Kommunikationssystems eine zusätzliche Unterstützung zumindest des zweiten Übertragungsverfahrens (TDD, FDD) signalisiert wird, und
von der Basisstation (BS) abhängig von der signalisierten Unterstützung durch die Teilnehmerstation (UE) Informationen über Nachbarfunkzellen (Ztdd) zumindest des zweiten Kommunikationssystems in einem verbindungsindividuellen Signalisierungskanal zu der Teilnehmerstation (UE) signalisiert werden.

3. Verfahren nach einem vorhergehenden Anspruch, bei dem die gemessenen Werte bezüglich der Basisstationen (NB) des zweiten Funk-Kommunikationssystems gewichtet werden.

4. Verfahren nach dem vorhergehenden Anspruch, bei dem zumindest ein Wichtungsfaktor von der Basisstation (BS) des ersten Funk-Kommunikationssystems zu der Teilnehmerstation (UE) signalisiert wird.

5. Verfahren nach einem vorhergehenden Anspruch, bei dem das erste Funk-Kommunikationssystem ein TDMA-basiertes Übertragungsverfahren (GSM) und/oder das zweite Funk-Kommunikationssystem ein CDMA-basiertes Übertragungsverfahren (TDD, FDD) unterstützt.

6. Verfahren nach einem vorhergehenden Anspruch, bei dem die Signalisierung der Nachbarfunkzellen (Ztdd) des zweiten Funk-Kommunikationssystems abhängig von einer Verkehrsbelastung in dem ersten Funk-Kommunikationssystem und/oder abhängig von einem aktuellen Aufenthaltsort der Teilnehmerstation (UE) duchgeführt wird.

7. Verfahren nach einem vorhergehenden Anspruch, bei dem der Teilnehmerstation (UE) auf einem von der Basisstation (BS) ausgesendeten Organisationskanal (BCCH) signalisiert wird, daß in Funkzellen (Ztdd) des zweiten Funk-Kommunikationssystems zumindest das zweite Übertragungsverfahren (TDD, FDD) unterstützt wird.

8. Verfahren nach einem vorhergehenden Anspruch, bei dem von der Teilnehmerstation (UE) die Unterstützung des zweiten Übertragungsverfahrens (TDD, FDD) in einem wahlfreien Zugriffskanal (RACH) bei einem Verbindungsaufbau zu der Basisstation (BS) des ersten Funk-Kommunikationssystems signalisiert wird.

9. Verfahren nach einem vorhergehenden Anspruch, bei dem von der Basisstation (BS) als verbindungsindividueller Signalisierungskanal ein Bestätigungskanal (AGCH) zur Signalisierung der Informationen über Nachbarfunkzellen (Ztdd) des zweiten Funk-Kommunikationssystems verwendet wird.

10. Verfahren nach einem vorhergehenden Anspruch, bei dem die Informationen über Nachbarfunkzellen (Ztdd) für eine Verbindungsweiterschaltung zu dem zweiten Funk-Kommunikationsystem und/oder für einen Aufbau eines zusätzlichen Dienstes in dem zweiten Funk-Kommunikationssystem genutzt werden.

11. Verfahren nach einem vorhergehenden Anspruch, bei dem die Informationen über Nachbarfunkzellen (Ztdd) gemeinsam mit einer der Mobilitätsverwaltung des ersten Funk-Kommunikationssystems zugeordneten Signalisierung zu der Teilnehmerstation (UE) signalisiert werden.

## Revendications

1. Procédé de signalisation d'informations sur des cellules radio voisines dans un système de radiocommunication, dans lequel sont effectuées, par une station d'abonné (UE), des mesures relatives à des caractéristiques de transmission respectives vers des stations de base (BS, NB) d'un premier système de radiocommunication qui supporte un premier procédé de transmission (GSM) et d'au moins un deuxième système de radiocommunication qui supporte un deuxième procédé de transmission (TDD, FDD),
**caractérisé en ce que**
les mesures relatives aux stations de base (NB) du deuxième système de radiocommunication sont appliquées sur un format utilisé dans le premier système de radiocommunication et signalées conjointement à une station de base (BS) du premier système de radiocommunication.

2. Procédé selon la revendication 1, dans lequel est signalé par une station d'abonné (UE), dans le cas d'un établissement de connexion vers une station de base (BS) du premier système de radiocommunication, un support additionnel d'au moins le deuxième procédé de transmission (TDD, FDD) et des informations concernant des cellules radio voisines (Ztdd) d'au moins le deuxième système de communication sont signalées par la station de base (BS), en fonction du support signalé par la station d'abonné (UE), dans un canal de signalisation individuel à la connexion, vers la station d'abonné (UE).

3. Procédé selon une revendication précédente, dans lequel les valeurs mesurées relatives aux stations de base (NB) du deuxième système de radiocommunication sont pondérées.

4. Procédé selon la revendication précédente, dans lequel au moins un facteur de pondération est signalé vers la station d'abonné (UE) par la station de base (BS) du premier système de radiocommunication.

5. Procédé selon une revendication précédente, dans lequel le premier système de radiocommunication supporte un procédé de transmission basé sur le TDMA (GSM) et/ou le deuxième système de radiocommunication supporte un procédé de transmission basé sur le CDMA (TDD, FDD).

6. Procédé selon une revendication précédente, dans lequel la signalisation des cellules radio voisines (Ztdd) du deuxième système de radiocommunication est effectuée en fonction d'une charge de trafic dans le premier système de radiocommunication et/ou en fonction d'un lieu de séjour actuel de la station d'abonné (UE).

7. Procédé selon une revendication précédente, dans lequel il est signalé à la station d'abonné (UE), sur un canal d'organisation (BCCH) émis par la station de base (BS), qu'au moins le deuxième procédé de transmission (TDD, FDD) est supporté dans des cellules radio (Ztdd) du deuxième système de radiocommunication.

8. Procédé selon une revendication précédente, dans lequel le support du deuxième procédé de transmission (TDD, FDD) est signalé par la station d'abonné (UE) dans un canal d'accès aléatoire (RACH) lors d'un établissement de connexion vers la station de base (BS) du premier système de radiocommunication.

9. Procédé selon une revendication précédente, dans lequel est utilisé par la station de base (BS), en tant que canal de signalisation individuel à la connexion, un canal de confirmation (AGCH) pour la signalisation des informations concernant des cellules radio voisines (Ztdd) du deuxième système de radiocommunication.

10. Procédé selon une revendication précédente, dans lequel les informations concernant des cellules radio voisines (Ztdd) sont utilisées pour un transfert de connexion vers le deuxième système de radiocommunication et/ou pour un établissement d'un service supplémentaire dans le deuxième système de radiocommunication.

11. Procédé selon une revendication précédente, dans lequel les informations concernant des cellules radio voisines (Ztdd) sont signalées vers la station d'abonné (UE) conjointement avec une signalisation affectée à la gestion de la mobilité du premier système de radiocommunication.

## Claims

1. Method for signalling information about adjacent radio cells in a radio communication system, in which user equipment (UE) undertakes measurements relating to the relevant transmission characteristics for Base Stations (BS, NB) of a first radio communication system which supports a first data transmission procedure (GSM), and at least of a second radio communication system which supports a second data transmission procedure (TDD, FDD),
**characterized in that**
the measurements relating to the Base Station (NB) of the second radio communication system are mapped to a format used in the first radio communication system and signalled jointly to a Base Station (BS) of the first radio communication system.

2. Method in accordance with Claim 1, in which
user equipment (UE), on establishing a connection to a Base Station (BS) of the first radio communication system, signals additional support for at least the second transmission procedure (TDD, FDD) and the Base Station (BS), depending on the support signalled by the user equipment (UE), signals information about adjacent cells (Ztdd) at least of the second communication system in a connection-individual signalling channel to the user equipment (UE).

3. Method in accordance with a preceding claim, in which the measured values relating to the Base Station (NB) of the second radio communication system are weighted.

4. Method in accordance with the previous claim, in which at least one weighting factor is signalled from the Base Station (BS) of the first radio communication system to the user equipment (UE).

5. Method in accordance with a preceding claim, in which the first radio communication system supports a TDMA-based data transmission method (GSM) and/or the second radio communication system supports a CDMA-based data transmission method (TDD, FDD).

6. Method in accordance with a preceding claim, in which the signalling of the adjacent cells (Ztdd) of the second. radio communication system is undertaken depending on the traffic load in the first radio communication system and/or depending on a current location of the user equipment (UE).

7. Method in accordance with a preceding claim, in which the user equipment (UE) is sent signals on a Broadcast Control Channel transmitted by the Base Station (BS), to indicate that at least the second data transmission method (TDD, FDD) is supported in radio cells (Ztdd) of the second radio communication system.

8. Method in accordance with a previous claim in which the user equipment (UE) signals its support for a second transmission procedure (TDD, FDD) in a random access channel (RACH) on establishing a connection to the Base Station (BS) of the first radio communication system.

9. Method in accordance with a preceding claim, in which the Base Station (BS) uses as a connection-individual signalling channel an acknowledgement channel (AGCH) for signalling information about adjacent channels (Ztdd) of the second radio communication system.

10. Method in accordance with a preceding claim, in which the information about adjacent cells (Ztdd) for a handover to the second radio communication system and/or for setting up an additional service is used in the second radio communication system.

11. Method in accordance with a preceding claim, in which the information about adjacent cells (Ztdd) is signalled jointly with the mobility management of the signalling assigned to the first radio communication system to the user equipment (UE).
